# EUROPÄISCHE PATENTSCHRIFT

(11) **EP 0 907 525 B1**
(45) Veröffentlichungstag und Bekanntmachung des Hinweises auf die Patenterteilung: **22.03.2000**
(21) Anmeldenummer: 97929220.8
(22) Anmeldetag: 19.06.1997
(51) Int. Cl.: B60K 41/22, F16H 61/20, B60K 41/24

(54) **LASTSCHALTGETRIEBE FÜR KRAFTFAHRZEUGE**
POWER SHIFT TRANSMISSION FOR MOTOR VEHICLES
BOITE DE VITESSES COUPLABLE SOUS CHARGE POUR VEHICULES AUTOMOBILES

(30) Priorität: 25.06.1996 DE 19625355
(43) Veröffentlichungstag der Anmeldung: 14.04.1999
(73) Patentinhaber: ZF FRIEDRICHSHAFEN Aktiengesellschaft, 88038 Friedrichshafen (DE)
(72) Erfinder: DOMIAN, Hans-Jörg, D-88090 Immenstaad (DE); DREIBHOLZ, Ralf, D-88074 Meckenbeuren (DE); KUHN, Walter, D-88045 Friedrichshafen (DE)
(86) Internationale Anmeldenummer: EP9703198
(87) Internationale Veröffentlichungsnummer: WO9749573

(56) Entgegenhaltungen:
- EP-A- 0 251 156
- EP-A- 0 517 420
- EP-A- 0 681 123
- EP-B- 0 214 989
- US-A- 4 487 303
- US-A- 5 474 164
- PATENT ABSTRACTS OF JAPAN vol. 010, no. 277 (M-519), 19.September 1986 & JP 61 099747 A (NISSAN MOTOR CO LTD), 17.Mai 1986,

## Beschreibung

Die Erfindung bezieht sich auf ein Lastschaltgetriebe für Kraftfahrzeuge und fahrbare Arbeitsmaschinen.

Lastschaltgetriebe haben im allgemeinen einen hydrodynamischen Wandler als Anfahreinrichtung. Diese Wandler beanspruchen viel Platz und haben einen Leistungsverlust durch Strömungs- oder Panschverluste. Um die Getriebelänge zu verkürzen und diese Leistungsverluste zu vermeiden, ist in einer besonderen Ausgestaltung der in der europäischen Patentschrift 0 214 989 B2 beschriebenen Erfindung der Wandler weggelassen. Seine Funktion als Anfahrelement übernimmt eine Getriebebremse. Diese Bremse wird dabei stark beansprucht.

Der Erfindung liegt die Aufgabe zugrunde, ausgehend von der EP-A 517 420 ein Lastschaltgetriebe mit einer kompakten, kostengünstigen und verschleißarmen Anfahreinrichtung von hoher Lebensdauer und hohem Wirkungsgrad zu schaffen, wobei ein wegrollen entgegen der Fahrtrichtung vermieden wird.

Diese Aufgabe wird erfindungsgemäß durch die Merkmale des Anspruchs 1 gelöst. Sperren als sogenannte Hill-Holder sind im Stand der Technik bekannt, siehe JP-A-61 099 747.

Um die Lamellenkupplung möglichst kompakt bauen zu können, muß die Belastung der Kupplung niedrig gehalten werden. Dabei sollte die Kupplung nur möglichst kurz unter Schlupf betrieben werden, um ihre thermische Beanspruchung gering zu halten. In jedem Fall sollte das Fahrzeug am Berg nicht mit der Kupplung gehalten werden müssen. Um diese Belastung zu vermeiden, besitzt das Lastschaltgetriebe die besagte Sperre, die ein Wegrollen des Fahrzeuges entgegen der durch die Gangwahl beabsichtigten Fahrtrichtung verhindert.

Eine Schaltkupplung ist in Lastschaltgetrieben ohnehin vorhanden ist. Diese als Anfahreinrichtung dienende Schaltkupplung muß lediglich etwas stärker dimensioniert werden. Die Regelung gewährleistet, daß die Schaltkupplung so wenig wie möglich thermisch belastet und abgenutzt wird. Länge und Gewicht des Lastschaltgetriebes werden bei dieser Lösung erheblich verringert, da der hydrodynamische Wandler wegfällt und auch keine eigene vorgeschaltete Kupplung benötigt wird.

Vorzugsweise ist diese Schaltkupplung als geregelte Lamellenkupplung ausgebildet.

Erfindungsgemäß verhindert eine Sperre das Wegrollen des Kraftfahrzeuges entgegen der durch die Gangwahl beabsichtigten Fahrtrichtung.

In einer Alternative der Erfindung ist die Sperre als Freilauf ausgebildet, insbesondere als Klemmkörperfreilauf oder Klinkenfreilauf.

Vorzugsweise ist der Freilauf auf der Antriebswelle des Lastschaltgetriebes, d. h. auf der dem Getriebe zugewandten Seite der Lamellenkupplung, insbesondere im Bereich der Lamellenkupplung angebracht.

Neben diesen mechanischen Sperren kann als Alternative der Erfindung ein unbeabsichtigtes Wegrollen entgegen der Fahrtrichtung durch eine elektronische Schaltung, die auf Schaltelemente einwirkt, verhindert werden. Eine Möglichkeit ist dabei, bei einem unbeabsichtigten Wegrollen die Betriebsbremse zu aktivieren. Dabei muß allerdings das Bremssystem mit dem Getriebesystem abgestimmt sein. Eine weitere Alternative der Erfindung besteht darin, ist, die Sperre im Getriebe in Verbindung mit der Anfahrkupplung als abgeschlossenes System, als Getriebebremse auszugestalten. Vorzugsweise wird die Bremswirkung dadurch erzielt, daß im Getriebe eine Schaltelemente-Kombination eingestellt wird, die den Getriebeabtrieb blockiert. Dabei wird die elektronische Ansteuerung dieser Getriebebremse vorteilhaft als Überschneidungssteuerung erfolgen, d. h. wenn die Anfahrkupplung beim Einkuppeln zu greifen beginnt, wird die Bremswirkung eines Schaltelements in dem Maß zurückgenommen, in dem die Anfahrkupplung Moment aufnimmt. Wie stark dabei die Haltemomentüberschneidung sein muß, hängt von der Hangabtriebskraft des Fahrzeuges durch das Gefälle ab. Vorteilhaft wird das Haltemoment der Getriebebremse, das von der Überschneidungssteuerung vorgegeben wird, der Hangabtriebskraft angepaßt. Damit treten keine zu hohen Reibungsverluste auf, die mechanische Leistung vernichten und unnötige thermische Belastung hervorrufen.

Die Hangabtriebkraft kann bei bekannter Fahrzeugmasse anhand ihrer Wirkung auf das Fahrzeug bestimmt werden, d. h. anhand der Beschleunigung des Fahrzeugs während einer sehr kurzen Meßzeit, innerhalb der das Fahrzeug kaum spürbar wegrollt. Dies erfordert eine Messung der Winkelgeschwindigkeit der Getriebeabtriebswelle und eine Kraftberechnung aus der Winkelgeschwindigkeitsänderung.

Dazu kann die Hangabtriebskraft des Fahrzeugs anhand einer Messung des daraus resultierenden Drehmoments der Getriebeabtriebswelle bestimmt werden.

In einer weiteren Ausgestaltung der Erfindung wird die Hangabtriebskraft bei bekannter Fahrzeugmasse mittels eines Neigungssensors bestimmt.

Vorteilhaft wird die Hangabtriebskraft bei bekannter Fahrzeugmasse über den Gradienten der Getriebeabtriebsdrehzahl ermittelt.

Vorteilhaft wird die Lamellenkupplung als nasse Kupplung ausgebildet, um eine gute Wärmeabfuhr zu erzielen.

Eine der wesentlichen Alternative der Erfindung ist, die geregelte Getriebebremse als kompakte, kostengünstige und verschleißarme Anfahreinrichtung auszubilden, wobei eine Überschneidungsschaltung das Wegrollen des Kraftfahrzeuges entgegen der durch die Gangwahl beabsichtigten Fahrtrichtung durch Aktivierung der Betriebsbremse verhindert. Dies ist insoweit von Vorteil, als eine Getriebebremse in Lastschaltgetrieben ohnehin vorhanden ist. Diese als Anfahreinrichtung dienende Getriebebremse muß lediglich etwas stärker dimensioniert werden. Die Regelung gewährleistet, daß die Getriebebremse so wenig wie möglich thermisch belastet und abgenutzt wird. Länge und Gewicht des Lastschaltgetriebes werden bei dieser Lösung erheblich verringert, da der hydrodynamische Wandler wegfällt und auch keine eigene vorgeschaltete Kupplung benötigt wird.

In Zeichnungen sind zwei Ausführungsbeispiele der Erfindung dargestellt.
Es zeigen:
- Fig. 1: schematisch einen Kraftübertragungsweg eines Kraftfahrzeuges mit Lastschaltgetriebe;
- Fig. 2: diesen Kraftübertragungsweg mit einem Frei lauf auf der Antriebswelle gegen das Getrie begehäuse.

Ein Motor 1 treibt über eine als nasse Lamellenkupplung ausgebildete Anfahrkupplung 2 und ein Lastschaltgetriebe 3 sowie ein nachgeordnetes Ausgleichgetriebe 4 ein Fahrzeug an.

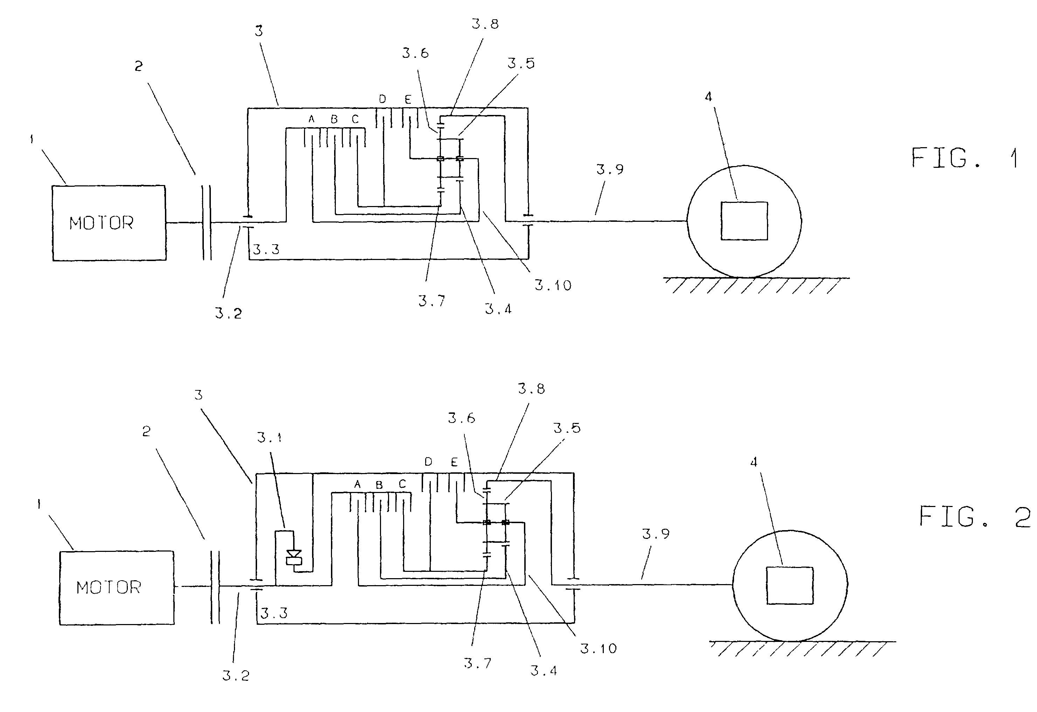

In der in Fig. 2 dargestellten Ausgestaltung der Erfindung verhindert ein mechanischer Freilauf 3.1 zwischen Getriebeantriebswelle 3.2 und Getriebegehäuse 3.3 ein Verdrehen dieser Welle entgegen der Motordrehrichtung. Dies bedingt bei im Lastschaltgetriebe 3 geschalteten Vorwärtsgängen eine Rückrollsperre und bei geschaltetem Rückwärtsgang eine Wegrollsperre nach vorne, d. h. in beiden Fällen eine Sperre gegen unbeabsichtigtes Wegrollen des Kraftfahrzeuges entgegen der durch die Gangwahl beabsichtigten Fahrtrichtung.

In der in Fig. 1 dargestellten Ausgestaltung der Erfindung ist die Sperre, die ein Wegrollen des Fahrzeuges entgegen der durch die Gangwahl beabsichtigten Fahrtrichtung verhindert, als elektronisch geregelte Sperre ausgebildet, die durch Aktivierung der vorstehend genannten Schaltelemente-Kombination wirkt. Das Wegrollen des Kraftfahrzeuges entgegen der durch die Gangwahl beabsichtigten Fahrtrichtung wird in diesem Fall dadurch verhindert, daß eine entsprechende Schaltelemente-Kombination im Getriebe den Getriebeabtrieb blockiert. Dies geschieht folgendermaßen:
1. Fall: Vorwärts Anfahren mit dem ersten Gang:
   Die Bremsen D und E sind festgebremst und die Kupplung B ist geschaltet. Beginnt die Anfahrkupplung 2 zu greifen, wird die Bremse D in dem Maße losgelassen, in dem die Anfahrkupplung Moment aufnimmt. Das Sonnenrad 3.4 mit größerem Radius, das über die Kupplung B angetrieben wird, treibt das Planetenrad 3.5, das wiederum das Planetenrad 3.6 treibt. Wird das Haltemoment der Bremse D zurückgenommen, so beginnt sich das Sonnenrad 3.7 mit kleinerem Radius in die entgegengesetzte Richtung zum Sonnenrad 3.4 mit dem größeren Radius zu drehen. Damit kann sich das Hohlrad 3.8 in Drehrichtung des Sonnenrads 3.4 größerem Radius zu drehen beginnen. Die durch den Hangabtrieb des Fahrzeuges und durch das daraus resultierende Drehmoment der Getriebeabtriebswelle 3.9 bedingte Kraft auf die Verzahnung des Hohlrades 3.8, die über die Planetenräder 3.5 und 3.6 auf die beiden Sonnenräder 3.4 und 3.7 übertragen wird, wird von dem Sonnenrad 3.7 mit kleinerem Radius auf das Sonnenrad 3.4 mit dem größeren Radius umverteilt.
2. Fall: Vorwärts Anfahren mit dem zweiten Gang:
   Die Bremsen D und E sind festgebremst und die Kupplung B ist geschaltet. Beginnt die Anfahrkupplung 2 zu greifen, wird die Bremse E in dem Maße losgelassen, in dem die Anfahrkupplung Moment aufnimmt. Das Sonnenrad 3.4 mit größerem Radius, das über die Kupplung B angetrieben wird, treibt das Planetenrad 3.5, das wiederum das Planetenrad 3.6 treibt. Wird das Haltemoment der Bremse E zurückgenommen, so beginnt sich der Planetenträger 3.10 zu drehen, da das Planetenrad 3.6 auf dem festgebremsten Sonnenrad 3.7 mit kleinerem Radius abrollt. Das Planetenrad 3.6 treibt das Hohlrad 3.8. Damit kann sich das Hohlrad 3.8 in Drehrichtung des Sonnenrades 3.4 mit dem größeren Radius zu drehen beginnen. Die durch den Hangabtrieb des Fahrzeuges und durch das daraus resultierende Drehmoment der Getriebeabtriebswelle 3.9 bedingte Kraft auf die Verzahnung des Hohlrades 3.8, die über die Planetenräder 3.5 und 3.6 auf das Sonnenrad 3.7 mit kleinerem Radius und den Planetenträger 3.10 übertragen wird, wird von dem Planetenträger 3.10 auf das Sonnenrad 3.4 mit größerem Radius umverteilt.
3. Fall: Anfahren mit dem Rückwärtsgang:
   Die Bremsen D und E sind festgebremst und die Kupplung C ist geschaltet. Beginnt die Anfahrkupplung 2 zu greifen, wird die Bremse D in dem Maße losgelassen, in dem die Anfahrkupplung Moment aufnimmt. Das Sonnenrad 3.7 mit dem kleineren Radius, das über die Kupplung C angetrieben wird, treibt das Planetenrad 3.6 an. Wird das Haltemoment der Bremse D zurückgenommen, so beginnt sich das Sonnenrad 3.7 mit kleinerem Radius zu drehen. Das Planetenrad 3.6 beginnt sich in entgegengesetzte Richtung zum Sonnenrad 3.7 mit kleinerem Radius zu drehen. Damit beginnt sich das Hohlrad 3.8 in entgegengesetzte Richtung zum Sonnenrad 3.7 mit kleinerem Radius zu drehen. Die durch den Hangabtrieb des Fahrzeuges und durch das daraus resultierende Drehmoment der Getriebeabtriebswelle 3.9 bedingte Kraft auf die Verzahnung des Hohlrades 3.8, die über das Hohlrad 3.8 und das Planetenrad 3.6 auf das Sonnenrad 3.7 mit dem kleineren Radius übertragen wird, wird von der Bremse D auf die Schaltkupplung C umverteilt.

Bei der selbständigen Lösung der der Erfindung zugrundeliegenden Aufgabe in Form der geregelten Schaltkupplung als Anfahreinrichtung, für die gesondert Schutz begehrt wird, fällt die Anfahrkupplung 2 aus Fig. 1 weg. Die Kupplung B ist dafür stärker dimensioniert und dient als Anfahrkupplung. Zum Anfahren wird sie geregelt geschlossen, der erste Gang wird damit geschaltet. Zum Rückwärts-Anfahren wird die Kupplung C geregelt geschlossen. Diese Kupplung ist als Anfahrkupplung ebenfalls stärker dimensioniert. Das Anfahren im Rückwärtsgang ist allerdings nicht so häufig wie das Vorwärts-Anfahren, so daß die Anforderung in Hinblick auf Verschleiß an die Kupplung C nicht so hoch sind wie die an die Kupplung B.

Vorteilhaft werden durch Überschneidungsschaltungen die Kupplungen B und C weiter entlastet.

Das Vorwärts-Anfahren gestaltet sich dann folgendermaßen:
Die Bremsen D und E sind festgebremst und die Kupplung B wird geschaltet. Beginnt die Kupplung B zu greifen, wird die Bremse D in dem Maße losgelassen, in dem die Kupplung B Moment aufnimmt.

Das Rückwärts-Anfahren gestaltet sich analog folgendermaßen:
Die Bremsen D und E sind festgebremst und die Kupplung C wird geschaltet. Beginnt die Kupplung C zu greifen, wird die Bremse D in dem Maße losgelassen, in dem die Kupplung C Moment aufnimmt.

Bei der zweiten selbständigen Lösung der der Erfindung zugrundeliegenden Aufgabe, für die gesondert Schutz begehrt wird, bei der eine geregelten Getriebebremse als Anfahreinrichtung dient und eine Überschneidungsschaltung das Wegrollen des Kraftfahrzeuges entgegen der durch die Gangwahl beabsichtigten Fahrtrichtung durch Aktivierung der Betriebsbremse verhindert, fällt die Anfahrkupplung 2 aus Fig. 1 weg. Die Bremse E ist dafür stärker dimensioniert und dient als Anfahrkupplung. Zum Anfahren im ersten Gang ist die Kupplung B geschlossen. Die Betriebsbremsen sind festgebremst, so daß das Fahrzeug nicht wegrollen kann. Solange die Bremse E offen ist, kann sich der Planetenträger 3.10 frei drehen und überträgt damit kein Moment auf das Hohlrad 3.8. Dabei rollt sich das mit dem Hohlrad 3.8 im Eingriff stehende Planetenrad 3.6 auf diesem ab. Zum Anfahren wird nun die Bremse E geregelt geschlossen, und in dem Maße, in dem der Planetenträger Moment aufnimmt, wird die Betriebsbremse gelöst.
Zum Anfahren im Rückwärtsgang ist die Kupplung C geschlossen. Das Anfahren erfolgt in gleicher Weise wie oben: Die Betriebsbremsen sind festgebremst, so daß das Fahrzeug nicht wegrollen kann. Solange die Bremse E offen ist, kann sich der Planetenträger 3.10 frei drehen und überträgt damit kein Moment auf das Hohlrad 3.8. Dabei rollt sich das mit dem Hohlrad 3.8 im Eingriff stehende Planetenrad 3.6 auf diesem ab. Zum Anfahren wird nun die Bremse E geregelt geschlossen, und in dem Maße, in dem der Planetenträger Moment aufnimmt, wird die Betriebsbremse gelöst.

### Bezugszeichen

- 1: Motor
- 2: Anfahrkupplung
- 3: Lastschaltgetriebe
- 3.1: Freilauf
- 3.2: Getriebeantriebswelle
- 3.3: Getriebegehäuse
- 3.4: Sonnenrad
- 3.5: Planetenrad
- 3.6: Planetenrad
- 3.7: Sonnenrad
- 3.8: Hohlrad
- 3.9: Getriebeabtriebswelle
- 3.10: Planetenträger
- 4: Ausgleichgetriebe

## Patentansprüche

1. Lastschaltgetriebe für Kraftfahrzeuge mit einer vorgeschalteten Anfahreinrichtung, welche als vorgeschaltete Anfahrkupplung (2), als Schaltkupplung, als geregelte Lamellenkupplung oder als Getriebebremse ausgebildet ist,
**dadurch gekennzeichnet** , daß eine Sperre zur Verhinderung des Wegrollens des Kraftfahrzeuges entgegen der durch die Gangwahl beabsichtigten Fahrtrichtung vorgesehen ist, wobei die Sperre als Freilauf (3.1) oder als elektronisch geregelte Sperre oder als Getriebebremse ausgebildet ist.

2. Lastschaltgetriebe nach Anspruch 1, **dadurch gekennzeichnet**, daß der als Sperre dienende Freilauf (3.1) auf eine Welle wirkt, die sich bei Vorwärts- und Rückwärtsfahrt bei Antrieb durch die Antriebsmaschine ständig in die gleiche Richtung dreht, und die Welle daran hindert, sich bei unterbrochenem Antrieb in die entgegengesetzte Richtung zu drehen.

3. Lastschaltgetriebe nach Anspruch 1 oder 2, **dadurch gekennzeichnet**, daß der Freilauf (3.1) als Klemmkörperfreilauf oder Klinkenfreilauf ausgebildet ist.

4. Lastschaltgetriebe nach einem der vorangegangenen Ansprüche, **dadurch gekennzeichnet**, daß der Freilauf (3.1) auf der Antriebswelle des Lastschaltgetriebes (3), insbesondere im Bereich der Lamellenkupplung angebracht ist.

5. Lastschaltgetriebe (3) nach Anspruch 1, **dadurch gekennzeichnet**, daß die elektronisch geregelte Sperre durch Aktivierung der Betriebsbremse wirkt.

6. Lastschaltgetriebe nach einem der vorangegangenen Ansprüche, **dadurch gekennzeichnet**, daß die Getriebebremse auf ein oder mehrere Bauteile eines Planetengetriebes wirkt.

7. Lastschaltgetriebe nach einem der vorangegangenen Ansprüche, **dadurch gekennzeichnet**, daß die Getriebebremse und die Anfahrkupplung (2) des Lastschaltgetriebes ( 3) durch eine Überschneidungssteuerung geregelt werden.

8. Lastschaltgetriebe nach Anspruch 7, **dadurch gekennzeichnet** , daß die Überschneidungsteuerung von der Hangabtriebskraft abhängig geregelt wird.

9. Lastschaltgetriebe nach Anspruch 8, **dadurch gekennzeichnet**, daß die Hangabtriebskraft anhand ihrer Wirkung auf die Getriebeabtriebswelle (3.9) errechnet wird.

10. Lastschaltgetriebe nach Anspruch 8, **dadurch gekennzeichnet**, daß die Hangabtriebskraft mittels eines Kraft- oder Momentsensors bestimmt wird.

11. Lastschaltgetriebe nach Anspruch 8, **dadurch gekennzeichnet**, daß die Hangabtriebekraft mittels eines Neigungssensors bestimmt wird.

12. Lastschaltgetriebe nach Anspruch 8, **dadurch gekennzeichnet**, daß die Hangabtriebekraft über den Gradienten der Getriebeabtriebsdrehzahl ermittelt wird.

13. Lastschaltgetriebe nach einem der vorangegangenen Ansprüche, **dadurch gekennzeichnet**, daß die Lamellenkupplung als nasse Kupplung ausgebildet ist.

## Claims

1. A power shift transmission for motor vehicles with an upstream starter device, which is constructed as an upstream starter clutch (2), as a shift clutch, as a controlled disk clutch or as a gearing brake, characterised in that a lock is provided, which prevents the motor vehicle from rolling away in the opposite direction to the direction of travel intended by the gear selection, the lock being constructed as an idler (3.1) or as an electronically controlled lock or as a gearing brake.

2. A power shift transmission according to claim 1, characterised in that the idler (3.1) acting as a lock acts upon a shaft, which always rotate in the same direction during forward and reverse travel when driven by the drive machine, and prevents the shaft from rotating in the opposite direction when the drive is interrupted.

3. A power shift transmission according to claim 1 or 2, characterised in that the idler (3.1) is constructed as a clamping element idler or a pawl idler.

4. A power shift transmission according to one of the preceding claims, characterised in that the idler (3.1) is fitted on the drive shaft of the power shift transmission (3), more particularly in the region of the disk clutch.

5. A power shift transmission (3) according to claim 1, characterised in that the electronically controlled lock acts by actuating the operating brake.

6. A power shift transmission according to one of the preceding claims, characterised in that the gearing brake acts upon one or more components of a planetary gearing.

7. A power shift transmission according to one of the preceding claims, characterised in that the gearing brake and the starter clutch (2) of the power shift transmission (3) are controlled by an overlap control.

8. A power shift transmission according to claim 7, characterised in that the overlap control is controlled as a function of the slope output power.

9. A power shift transmission according to claim 8, characterised in that the slope output power is calculated by way of its effect on the gearing output shaft (3.9).

10. A power shift transmission according to claim 8, characterised in that the slope output power is determined by means of a force or torque sensor.

11. A power shift transmission according to claim 8, characterised in that the slope output power is determined by means of an inclination sensor.

12. A power shift transmission according to claim 8, characterised in that the slope output power is determined via the gradient of the gearing output rotational speed.

13. A power shift transmission according to one of the preceding claims, characterised in that the disk clutch is constructed as a wet clutch.

## Revendications

1. Boîte de vitesses commandée sous charge pour véhicules automobiles avec un dispositif de démarrage amont qui est réalisé sous la forme d'un embrayage de démarrage (2) amont, sous la forme d'un embrayage de changement de vitesses, sous la forme d'un embrayage à disques réglé ou sous la forme d'un frein à engrenage,
**caractérisée en ce qu**'un blocage est prévu pour empêcher que le véhicule roule dans le sens opposé à la direction de marche voulu par le choix de la vitesse enclenchée, en ce que le blocage est réalisé comme roue libre (3.1) ou comme blocage à réglage électronique ou comme frein à engrenage.

2. Boîte de vitesses commandée sous charge selon la revendication 1, **caractérisée en ce que** la roue libre (3.1) servant de blocage agit sur un arbre qui tourne en marche avant et en marche arrière avec un entraînement par la machine motrice toujours dans le même sens et empêche l'arbre de tourner dans le sens inverse lorsque l'entraînement est interrompu.

3. Boîte de vitesses commandée sous charge selon la revendication 1 ou 2, **caractérisée en ce que** la roue libre (3.1) est réalisée sous la forme d'une roue libre à dispositif à serrage ou d'une roue libre à cliquet.

4. Boîte de vitesses commandée sous charge selon l'une des revendications précédentes, **caractérisée en ce que** la roue libre (3.1) est montée sur l'arbre menant de la boîte de vitesses commandée sous charge (3), notamment dans la zone de l'embrayage à disques.

5. Boîte de vitesses commandée sous charge selon la revendication 1, **caractérisée en ce que** le blocage à réglage électronique agit par l'activation du frein de service.

6. Boîte de vitesses commandée sous charge selon l'une des revendications précédentes, **caractérisée en ce que** le frein de service agit sur un ou plusieurs éléments de construction d'un engrenage planétaire.

7. Boîte de vitesses commandée sous charge selon l'une des revendications précédentes, **caractérisée en ce que** le frein de service et l'embrayage de démarrage (2) de la boîte de vitesses commandée sous charge (3) sont réglés par une commande à recoupement.

8. Boîte de vitesses commandée sous charge selon la revendication 7, **caractérisée en ce que** la commande à recoupement est réglée en fonction de la force descensionnelle en pente.

9. Boîte de vitesses commandée sous charge selon la revendication 8, **caractérisée en ce que** la force descensionnelle en pente est calculée à partir de son effet sur l'arbre mené (3.9) de la boîte de vitesses.

10. Boîte de vitesses commandée sous charge selon la revendication 8, **caractérisée en ce que** la force descensionnelle en pente est déterminée au moyen d'un détecteur de force ou d'un détecteur de couple.

11. Boîte de vitesses commandée sous charge selon la revendication 8, **caractérisée en ce que** la force descensionnelle en pente est déterminée au moyen d'un détecteur d'inclinaison.

12. Boîte de vitesses commandée sous charge selon la revendication 8, **caractérisée en ce que** la force descensionnelle en pente est déterminée au moyen du gradient de la vitesse de sortie de la boîte de vitesses.

13. Boîte de vitesses commandée sous charge selon l'une des revendications précédentes, **caractérisée en ce que** l'embrayage à disques est réalisé sous la forme d'un embrayage humide.
